(19) Europäisches Patentamt
European Patent Office
Office européen des brevets

(11) **EP 2 172 529 B1**

(12) **EUROPEAN PATENT SPECIFICATION**

(45) Date of publication and mention
of the grant of the patent:
**07.06.2017 Bulletin 2017/23**

(51) Int Cl.:
*C09J 123/08* (2006.01)  *C09J 123/20* (2006.01)
*C08G 8/30* (2006.01)  *C09J 193/04* (2006.01)
*C09J 11/06* (2006.01)  *C09J 109/06* (2006.01)
*C09J 151/06* (2006.01)  *C09J 115/00* (2006.01)
*C09J 133/02* (2006.01)  *C09J 201/00* (2006.01)

(21) Application number: **09170942.8**

(22) Date of filing: **22.09.2009**

(54) **ALKALI DISPERSIBLE-TYPE HOT-MELT ADHESIVE COMPOSITION, PRODUCTION METHOD THEREOF, PASTING METHOD OF LABEL, AND CONTAINER**

ALKALI-DISPERGIERBARER SCHMELZHAFTKLEBER, ZUGEHOERIGES HERSTELLUNGSVERFAHREN FÜR EINE KLEBENDE FOLIE, UND BEHÄLTER

ADHÉSIF THERMOFUSIBLE DISPERSIBLES DANS UN LIQUIDE ALCALIN SON PROCÉDÉ DE FABRICATION POUR COLLANT ÉTIQUETTE ET RÉCIPIENT

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **03.10.2008 JP 2008258404**

(43) Date of publication of application:
**07.04.2010 Bulletin 2010/14**

(73) Proprietor: **Toyo ADL Corporation
Tokyo
104-0031 (JP)**

(72) Inventors:
• **Shibama, Hideaki
Tokyo 104-0031 (JP)**

• **Ishiguro, Hideyuki
Tokyo 104-0031 (JP)**

(74) Representative: **Neidl-Stippler, Cornelia
Neidl-Stippler
Patentanwaltskanzlei
Rauchstrasse 2
81679 München (DE)**

(56) References cited:
**EP-A2- 0 449 249**   **WO-A1-2007/013185**
**JP-A- 2005 220 244**   **US-A- 5 026 752**
**US-A- 5 143 961**

**Description**

Technical Field

The present invention relates to an alkali dispersible-type hot-melt adhesive composition, in particular, an alkali dispersible-type hot-melt adhesive composition suitable for the adhesive composition for pasting labels to glass containers such as glass bottles or plastic containers such as PET (polyethylene terephthalate) bottles, in which a refreshing drink, a seasoning, a detergent, a shampoo, a cocking oil, a cosmetic, a drug is filled with. Further, the present invention relates to an alkali dispersible-type hot-melt adhesive composition which can be used in a manner similar to the existing ones when applying and manually peeled together with a pasted material such as a label without residual adhesive readily as well as peeled readily from used containers such as a PET bottle together with the pasted material with a hot aqueous alkaline solution without residual adhesive, therefore it being particularly suitable for recycling containers such as PET bottles. The invention also relates to a production method thereof, and a container to which a label is pasted with the alkali dispersible-type hot-melt adhesive composition and a production method of the container.

Background Art

The production volume of PET bottles and the usage volume of the PET bottles for beverages both have been increasing in recent years. PET bottles used are disposed as wastes. In order to make the amount of waste as small as possible and to enable to recycle the waste materials as a resource, a recycle system has been built by the Law for Promotion of Utilization of Recycled Resources in Japan. When the PET bottles are recycled, PET bottles used and collected are cut into 8 mm square pellets, followed by immersing it into a hot aqueous alkaline solution (1.5% NaOH at 85 to 90°C) for about 15 minutes to peel labels. The Pellets are then washed with water, dried, and fractionated by a wind to remove labels, thereby pellets of PET being regenerated.

Conventionally, a label was usually pasted to a bottle with an adhesive at the strength by which the label was not able to be manually peeled. A label wrapping around a container body was much used as a label for a PET bottle, and a hot-melt adhesive was generally used as an adhesive for the label. However, when the hot-melt adhesive was used, the label was not peeled from the PET bottle even when the PET bottle was immersed into hot water or an aqueous alkaline solution. The hot-melt adhesive, therefore, has been an obstacle when recycling the PET bottles.

From these reasons, a label for a PET bottle was partially changed from a label using a hot-melt adhesive to a stretch label or a shrink label and thereby the recycling of the PET bottles was realized. A stretch label makes use of a principle of an elastic band that returns to an initial state when it is released after stretched. That is, a label wrapping around a container body which is stretched is put into a PET bottle, followed by releasing, thereby the label being wound around the PET bottle. On the other hand, in the case of a shrink label, PET bottle is put into the shrink label, followed by heating it by a heater or steam to shrink, thereby a label film being intimately attached to a container with no space therebetween. However, there is a problem that higher costs are needed when the stretch labels or shrink labels are used.

As an adhesive soluble in an aqueous alkaline solution, there is an aqueous emulsion adhesive. However, the aqueous emulsion adhesive has problems in handling such as that a working place is messed up during labeling and a solid content concentration varies during an operation. As a method of pasting a label wrapping around a body with a hot-melt adhesive needs less cost compared with the stretch label and shrink label, a hot-melt adhesive soluble in hot water or an aqueous alkaline solution and suitable for the recycle of the PET bottles is being developed energetically. Further, when there is used a label wrapping around the container body to which a hot-melt adhesive is applied, energy consumption and carbon dioxide generation during labeling thereof are respectively about one-tenth that of the case where the shrink label is used. It is, therefore, very environment-friendly to utilize the method of pasting the label wrapping around a body by use of the hot-melt adhesive. As a hot-melt adhesive composition that is able to be dissolved or dispersed in hot water or a hot aqueous alkaline solution, a polyester copolymer composition has been proposed (see, JP H11-512134 A). However, the polyester has a problem that the adhesive strength lacks stability due to partial heat decomposition as the heat resistance thereof is poor. In addition, it also has a problem of bad smell.

The Council for PET Bottle Recycling is forwarding the preparation of various laws and working out of guidelines regarding the PET bottles together with interested organizations and government ministries and agencies in order to recycle the PET bottles in Japan. Regarding the labels for PET bottles, "a self-imposed design guideline of second-class designated PET bottles" was made and a self-imposed restraint has been carried out in accordance with the guideline. The guideline provide that the label for PET bottles is a stretch label or a shrink label or the label for a PET bottle have to be made by a film such as an OPP (oriented polypropylene) film, a PE (polyethylene) film or a PET film or paper and be peeled from the PET bottle using a hot water or a hot aqueous alkaline solution.

The method of peeling a label from a PET bottle should be the following method provided by a "self-imposed restraint guideline of designated PET bottles" published by the Council for PET Bottle Recycling. That is, a hot alkali peeling test is conducted in such a manner that a bottle with a label, printing is cut into pellets, the pellets are immersed at a pellet concentration of 10% by weight into a 1.5% aqueous NaOH solution at 90°C, followed by slowly stirring for 15 minutes. It was then filtered with a filter and resulted pellets are observed by eyes and evaluated. When printing ink and adhesive do not remain on the bottle after the label was peeled, the label is judged as one having hot alkali peeling aptitude.

The present inventors have filed an alkali dispersible-type hot-melt adhesive composition that is fit for the standard (see, JP 2005-220244 A). This alkali dispersible-type hot-melt adhesive composition comprises a thermoplastic elastomer (A), a solid tackifier having an acid value of 100 mgKOH/g or more and 300 mgKOH/g or less (B), wax (C) and glyceride of fatty acid having 6 or more and 18 or less carbon atoms (D). As a label which is pasted to a PET bottle using this adhesive composition can be peeled manually and be peeled with a hot aqueous alkaline solution without residual adhesive and there is no re-attaching of the label, this alkali dispersible-type hot-melt adhesive composition conforms to the standard of the guideline. However, when a label is manually peeled, the hot-melt adhesive remains on the PET bottle. Some recycle vendors judge manually peeled PET bottles with residual adhesive as recycle-conforming products. In this case, the hot-melt adhesive may mingle in a PET resin to be recycled. In this connection, the case where the adhesive remains on the PET bottle when a label is manually peeled is provided as a C rank by the recycle standard of the Council for PET Bottle Recycling. The Council for PET Bottle Recycling has been working on so as to upgrade the C rank to B rank or higher in which it is provided that a label can be peeled with a hot aqueous alkali solution, that is, has hot alkali peeling aptitude and can also be manually peeled without adhesive residue. A problem, therefore, remains in the alkali dispersible-type hot-melt adhesive filed previously.

EP 0449249 A2 discloses an oiled-face adherable, hot melt adhesive composition comprising a thermoplastic base polymer such as ethylene-acrylate ester resin, a tackifier such as rosin ester derivative and optionally at least one additive selected from the group consisting of waxes such as paraffin wax, and plasticizers such as naphthene oil, at least one of the molecular chains in said constitutive components comprising a modified resin component obtained by introducing into the molecular chain a function group such as a phosphoric acid group or, if desired, a carboxyl or its anhydride group, for example, by grafting 2-hydroxy-3-(meth)-acryloxy-propyl phosphate. However EP 0449249 A2 does not disclose to provide an alkali dispersible-type hot-melt adhesive composition, which can be manually peeled from a base material together with a pasted material such as a label without residual adhesive and readily peeled from the base material using a hot aqueous alkaline solution together with the pasted material without residual adhesive by use of polypropylene wax to which maleic anhydride is graft-polymerized as at least one component of the hot-melt adhesive composition.

US 005143961 A discloses a hot melt adhesive which can provide strong bonds but is soluble in the presence of mild alkali, comprising a thermoplastic polymer, a polyalkyloxyazoline polymer, hydroxyl compound having a hydroxyl number greater than 150, and/or a carboxylic compound having an acid number or greater than 75, and optionally tackifiers such as rosin acids, hydrogenated rosins and terpen-phenolic resins, antioxidants, plasticizers, wax, for example, having an acid number between about 50 and 300 or a hydroxyl number of at least about 160 such as montan acid wax, extending diluents, perfumers, dyes, and other functional compounds. However, US 005143961 A does not disclose to provide an alkali dispersible-type hot-melt adhesive composition which can be manually peeled from a base material together with a pasted material such as a label without residual adhesive.

Disclosure of the Invention

An object of the present invention is to provide an alkali dispersible-type hot-melt adhesive composition, which can be manually peeled from a base material together with a pasted material such as a label without residual adhesive and readily peeled from the base material using a hot aqueous alkaline solution together with the pasted material without residual adhesive.

Another object of the present invention is to provide an alkali dispersible-type hot-melt adhesive composition which is preferably used to a hot-melt adhesive composition for a label made of a paper, an OPP film, a PE film or a PET film being pasted to a base material of a glass bottle, a plastic container in particular, an alkali dispersible-type hot-melt adhesive composition which conforms to "self-imposed design guideline of second-class designated PET bottle" published by the Council for PET Bottle Recycling in Japan, and preferably used as a hot-melt adhesive composition for a paper or OPP-made label wrapping around a body of a container such as PET bottle for a refreshing drink, a soy sauce which has advantageous properties such as that the label pasted to the bottle is not peeled when immersed into water for cooling but is readily peeled from the PET bottle without residual adhesive when the recovered PET bottle is pelletized and immersed into a hot aqueous alkaline solution, and does not re-attach to the PET bottle pellets at that time.

Further, another object of the present invention is to provide an alkali dispersible-type hot-melt adhesive composition having advantageous properties in addition to the above properties such as that a label pasted to a bottle using the hot-melt adhesive composition has a predetermined strength, the hot-melt adhesive composition has a low temperature dependency of adhesion strength, and a label pasted with the hot-melt adhesive composition is not peeled during ordinary usage but capable of manually peeling without residual adhesive.

Furthermore, another object of the present invention is to provide a method for producing an alkali dispersible-type hot-melt adhesive composition having the characteristics described above.

Further, another object of the present invention is to provide a container to which a label is pasted by use of the alkali dispersible-type hot-melt adhesive composition having the characteristics described above.

Further, another object of the present invention is to provide a method for producing a container to which a label wrapping around a container body is pasted by use of an alkali dispersible-type hot-melt adhesive composition having the characteristics described above.

The present invention relates to an alkali dispersible-type hot-melt adhesive composition, a method for producing the hot-melt adhesive composition, a container and a method for producing the container described below.

[1] An alkali dispersible-type hot-melt adhesive composition which comprises a thermoplastic elastomer (A), a rosin tackifier with an acid value of 100 mgKOH/g or more and 300 mgKOH/g or less (B), a terpene phenol resin and/or polybutene (C), synthetic oil (D), and polypropylene wax to which maleic anhydride is graft polymerized (E).

[2] The alkali dispersible-type hot-melt adhesive composition described in the item [1], wherein the polypropylene wax to which maleic anhydride is graft polymerized (E) has an acid value of 30 mgKOH/g or more and 100 mgKOH/g or less.

[3] The alkali dispersible-type hot-melt adhesive composition described in the item [1], wherein 15 parts by weight or more and 25 parts by weight or less of the thermoplastic elastomer (A), 30 parts by weight or more and 40 parts by weight or less of the rosin tackifier (B), 1 part by weight or more and 10 parts by weight or less of the terpene phenol resin and/or polybutene (C), 30 parts by weight or more and 40 parts by weight or less of the synthetic oil (D), and 1 parts by weight or more and 10 parts by weight or less of the polypropylene wax to which maleic anhydride is graft polymerized (E) are blended so as to be 100 parts by weight in total.

[4] The alkali dispersible-type hot-melt adhesive composition described in the item [1], wherein the softening point thereof is 60°C or more and 95°C or less.

[5] A method for producing an alkali dispersible-type hot-melt adhesive composition, which comprises blending a thermoplastic elastomer (A), a rosin tackifier with an acid value of 100 mgKOH/g or more and 300 mgKOH/g or less (B), a terpene phenol resin and/or polybutene (C), synthetic oil (D), and polypropylene wax to which maleic anhydride is graft polymerized (E) at a dissolving temperature of 90°C or more and 180°C or less.

[6] A container to which a label is pasted by use of the alkali dispersible-type hot-melt adhesive composition described in any one of the items [1] to [4].

[7] The container described in the item [6], wherein the label is one wrapping around the container body.

[8] The container described in the item [6], wherein the container is a plastic container made of PET (polyethylene terephthalate).

[9] The container described in the item [7], wherein the label is one made of an OPP film.

[10] The container described in the item [6], wherein the alkali dispersible-type hot-melt adhesive composition is applied to a printed surface of the label, followed by pasting the label to the container.

[11] A method for producing a container to which a label is pasted, wherein the alkali dispersible-type hot-melt adhesive composition described in any one of the items [1] to [4] is applied to a label, followed by pasting the label to the container.

Advantageous Effects of the Invention

When the alkali dispersible-type hot-melt adhesive composition of the present invention is used as a adhesive for pasting a label to a container, the label pasted to the container is not peeled under the ordinary usage condition. The label, however, can be manually peeled from a base material of the container without residual adhesive. Even when the label is pasted to, for example, a glass bottle or a PET bottle, the label may be readily peeled from a container without residual adhesive by immersing the container into a hot aqueous alkaline solution and the label peeled do not re-attach to the base material of the container.

Further, the alkali dispersible-type hot-melt adhesive composition of the present invention satisfies a peeling requirement of a label with a hot aqueous alkaline solution as a peeling solution and a peeling requirement that a label is manually peeled without residual adhesive, both of which are stipulated in the "self-imposed restraint guideline of designated PET bottles" published by the Council for PET Bottle Recycling in Japan. Accordingly, the alkali dispersible-type hot-melt adhesive composition of the present invention is preferably used as an adhesive when a label is pasted to a PET bottle.

Mode for carrying out the Invention

Hereinafter, an alkali dispersible-type hot-melt adhesive composition of the invention, a production method thereof, a container and a production method of the container will be described in more details.

In the beginning, the alkali dispersible-type hot-melt adhesive composition will be explained. The alkali dispersible-type hot-melt adhesive composition of the invention comprises, as mentioned above, a thermoplastic elastomer (A), a rosin tackifier having an acid value of 100 mgKOH/g or more and 300 mgKOH/g or less (B), a terpene phenol resin (C), synthetic oil (D), and polypropylene wax to which maleic anhydride is graft polymerized (E).

The thermoplastic elastomer (A) is a base polymer of an alkali dispersible-type hot-melt adhesive composition of the invention. The thermoplastic elastomer is a high molecular material that is an elastic material having natures similar to vulcanized rubber at a normal temperature and can be molded using an existing making machine as same as an ordinary thermoplastic resin at a high temperature. The thermoplastic elastomer has, in a molecule, both of an elastic rubber component (it is also called as a soft segment or a soft phase) and a molecular restraining component (it is also called as a hard segment or a hard phase) which disturbs the plastic deformation. Accordingly, the thermoplastic elastomer has an intermediate nature between rubber and plastics.

As the thermoplastic elastomer, there has been known (a) a styrene base (styrene block polymer) thermoplastic elastomer, (b) an olefin base thermoplastic elastomer, (c) a urethane base thermoplastic elastomer, (d) a polyester base thermoplastic elastomer, (e) a polyamide base thermoplastic elastomer, (f) a 1,2-butadiene base thermoplastic elastomer, (g) a vinyl chloride base thermoplastic elastomer, and so on. Any one of these may be used as the thermoplastic elastomer of the invention. Among these, a styrene base thermoplastic elastomer is preferred.

The styrene base thermoplastic elastomer has a polystyrene block and a rubber intermediate block generally. The polystyrene portion forms a physical crosslinking (domain) and plays as a bridging point. On the other hand, the intermediate rubber block imparts the rubber elasticity to a product. Examples of the intermediate soft segment include a polybutadiene elastomer (B), a polyisoprene elastomer (I) and a polyolefin elastomer (ethylene/propylene (EP), ethylene/butylene (EB), butylene/butadiene (BB). Depending on a mode of arrangement with polystyrene (S) of the hard segment and the intermediate soft segment, the styrene base thermoplastic elastomer is divided into two, that is a thermoplastic elastomer with a linear construction (linear type) and a thermoplastic elastomer with a radial construction (radical type). Among the preferred styrene base thermoplastic elastomer mentioned above, a polystyrene-poly(ethylene/butylene)-polystyrene block copolymer (SEBS), a polystyrene-poly(ethylene/propylene)-polystyrene block copolymer (SEPS), a polystyrene-polyisoprene-polystyrene block copolymer (SIS) and a polystyrene-poly(butylene/butadiene)-polystyrene block copolymer (SBBS) are preferably used, and a polystyrene-poly(ethylene/butylene)-polystyrene block copolymer (SEBS) is more preferably used in the invention.

Further, a rosin tackifier having an acid value of 100 mgKOH/g or more and 300 mgKOH/g or less (B) is used as a component in the invention. Rosin is an amber and amorphous natural resin obtained from pine and divided into a gum rosin, a wood rosin and a tall oil rosin depending on a production method. A main component thereof is a mixture of abietic acid having three ring structures, a conjugate double bond and a carboxyl group and isomers thereof and has a bulky structure with a high reactivity. Since the high reactivity leads to deterioration of the thermal stability, the rosin is generally hydrogenated or acid-modified to improve the stability. Examples of the rosin tackifier having an acid value of 100 mgKOH/g or more and 300 mgKOH/g or less (B) include raw rosin (unmodified rosin), hydrogenated rosin, (meth)acrylic acid-modified rosin, hydrogenated (meth)acrylic acid-modified rosin, maleic acid-modified rosin, hydrogenated maleic acid-modified rosin, fumaric acid-modified rosin, hydrogenated fumaric acid-modified rosin and so on, which respectively have the aforementioned acid value. Among these, hydrogenated rosin and (hydrogenated) acrylic acid-modified rosin are preferred, the acid-modified and/or hydrogenated rosin is more preferred, and the hydrogenated rosin tackifier is further preferred. When the acid value is less than 100 mg KOH/g, there occurs a problem that the alkali dispersibility is lost. On the other hand, when the acid value exceeds 300 mg KOH/g, there occur problems that the viscosity and the softening point of the hot-melt composition become higher.

In addition, the acid value is the number of milligrams of potassium hydroxide (KOH) necessary for neutralizing 1 g of sample. The acid value is measured in such a manner as shown below. That is, in the beginning, a sample is weighed precisely and charged into a 250 ml flask. Next, 50 ml of ethanol or an equi-volume mixture of ethanol and methanol is added thereto, followed by heating to dissolve. The solution was titrated using a 0.1N potassium hydroxide solution while frequently shaking. At this time, phenolphthalein is used as an indicator. An end point of the titration is set at a point where a rose pink color of the solution remains for 30 seconds. Then, a blank test is similarly conducted in order to correct the amount of potassium hydroxide solution used for the titration. Finally, a value of the acid value is obtained from the following formula:

```
Acid value = [consumption of 0.1N potassium hydroxide

solution (ml) x 5.611] / [sample amount (g)]
```

The terpene phenol resin used as component (C) in the invention is obtained by, for example, copolymerizing a cyclic terpene monomer and phenols under the presence of a Friedel-Crafts catalyst in an organic solvent. In the invention, a hydrogenated terpene phenol resin obtained by hydrogenating a terpene phenol resin obtained may be used as the terpene phenol resin. The terpene monomer may be a mono-cyclic terpene monomer or a bi-cyclic terpene monomer. Examples of the terpene monomer include cyclic monoterpenes such as pinene, limonene, iso-limonene, camphene, terpinene, terpinolene, phellandrene, bornylene, gum turpentine oil that is a mixture of these and mainly contains α-pinene and β-pinene, pine oil, or dipentene mainly containing d-limonene. Examples of the phenols include phenol, alkyl- or phenyl-substituted phenols such as cresol, xylenol, t-butylphenol, octylphenol, nonylphenol or phenylphenol; alkoxy-substituted phenols such as methoxyphenol; polyvalent phenols such as catechol, resorcinol, hydroquinone or pyrogallol; halogenated phenols such as chlorophenol or bromophenol; naphthol; dioxynaphthalene; bisphenol A; Among these, phenol and cresol are preferred. The various kinds of terpene phenol resin is readily commercially available and examples thereof include "YS POLYSTER" and "MIGHT ACE" (trade name) manufactured by Yasuhara Chemical Co., Ltd., and "TAMANOL" (trade name) manufactured by Arakawa Chemical Industries, Ltd. The softening point thereof is preferably from 20 to 160°C.

Further, polybutene used as component (C) in the invention is a copolymerized material with a long-chain hydrocarbon molecular structure obtained by reacting a main component isobutene with little component normal-butene. It is very much stable under a normal condition and a transparent nonpoisonous liquid polymer with no impurities. It is a low polymer consisting of isobutylene, which is a main component and butene-1, which is a little component and is prepared by using, as raw materials, a remaining fraction obtained by extracting butadiene from C4 fraction generated by decomposition of naphtha as it is. However this preparing method is different from a low-molecular weight polyisobutylene prepared by use of purified isobutylene. Polybutene is available as "Nisseki polybutene" manufactured by Nippon Oil Corporation, "TAFMER BL" manufactured by MITSUI CHEMICALS, INC., and "Idemitsu Polybutene" manufactured by Idemitsu Kosan Co., Ltd.

The synthetic oil (D) used in the invention is oil generally used as a plasticizer of rubbers and thermoplastic elastomers, that is, so-called process oil produced in petroleum refining. The process oil is largely divided into paraffin base process oil, naphthene base process oil and aromatic process oil. The process oil is a mixture of an aromatic ring containing compound, a naphthene ring containing compound and a paraffin chain containing compound. In general, a process oil in which the amount of aromatic carbons in total carbons is 30% or more is categorized as an aromatic one, a process oil in which the amount of naphthene ring carbons is 35 to 45% of is categorized as a naphthene base one, and a process oil in which the amount of paraffin chain carbons is 50% or more is categorized as a paraffin base one. Paraffin base crude oil is separated into paraffin base oil, aromatic base oil and so on by distilling, hydrogenating, extracting with a solvent and/or dewaxing with a solvent. Naphthene base crude oil as well is separated into naphthene base oil, aromatic base oil and so on by distilling and extracting with a solvent. The synthetic oil used in the invention is preferably naphthene base oil or aromatic base oil. Various grade synthetic oils are commercially available, for example, from Idemitu Kosan Co under trade name of "DIANA FRESIA" and "DIANA PROCESS OIL", Ltd. and from Fuji Kosan under trade names of "Fukkol NEW FLEX" and "FUKKOL FLEX".

The polypropylene wax to which maleic anhydride is graft polymerized (E) used in the invention may be any one as long as maleic anhydride is graft polymerized to polypropylene wax. The polypropylene wax to which maleic anhydride is graft polymerized (E) may be produced by mixing polypropylene wax, maleic anhydride and peroxide in, for example, an extruder to graft polymerize maleic anhydride to polypropylene wax. The polypropylene wax used as a raw material may be any one of existing polypropylene waxes as long as it is polypropylene wax and is not particularly restricted. The polypropylene wax is produced by a method of cracking a polymer or a method of polymerizing monomers. In the cracking method, polymer is melted and under this condition, polymer chains are cut by a shearing force to prepare polypropylene wax. On the other hand, in the polymerization method, for example, polypropylene monomers are anionically polymerized to produce polypropylene wax.

It is preferred that the polypropylene wax to which maleic anhydride is graft polymerized (E) has the acid value of 30 to 100 and the DSC melting point of 60 to 150°C in the invention. The DSC melting point is determined by a measurement method as follows. That is, Pyris 1 (trade name) manufactured by Perkin Elmer Inc. is used as a measurement device and the measurement conditions are set as that a sample is kept at 0°C for 5 minutes, then heated at a speed of 10°C/min up to 170°C, kept at 170°C for 1 minute, cooled down to 0°C at the speed of 40°C/min, kept at 0°C for 1 minute, and again heated up to 170°C at the speed of 10°C/min. The value of the melting point determined at such conditions makes the DSC melting point (same in what follows).

The polypropylene wax to which maleic anhydride is graft polymerized is commercially available as maleic anhydride-modified polypropylene wax from Clariant Japan under the trade name of "LICOCENE PPMA" and from Baker Petrolite Inc. under trade name of X-10016. Now, LICOCENE PPMA 6252, 1462, 6452 and 7452 available from Clariant Japan and X-10016 available from Baker Petrolite Inc. have physical property values as described below. Herein, the melt viscosity was determined in accordance with JIS (JAPAN Industrial Standard) K6882 (A process).

Table 1

| | Melt Viscosity (140°C) (mPa/s) | Acid Value (mgKOH/g) | DSC Melting Point (°C) |
|---|---|---|---|
| PPMA6252 | 100 | 40 | 127 |
| PPMA1462 | 600 | 50 | 66 |
| PPMA6452 | 1000 | 40 | 138 |
| PPMA7452 | 800 | 40 | 154 |
| X-10016 | 300 | 60 | 117 |

The alkali dispersible-type hot-melt adhesive composition of the invention is preferably obtained by blending 15 to 25 parts by weight of the thermoplastic elastomer (A), 30 to 40 parts by weight of the rosin tackifier (B), 1 to 10 parts by weight of the terpene phenol resin and/or polybutene (C), 30 to 40 parts by weight of the synthetic oil (D), and 1 parts by weight or more and 10 parts by weight or less of the polypropylene wax to which maleic anhydride is graft polymerized(E), so as to be 100 parts by weight in total.

In the invention, the thermoplastic elastomer (A) is used for making cohesion force of the adhesive higher. In the case where a blending amount thereof is less than 15 parts by weight, there causes a problem that the adhesive remains when a label is peeled off. On the other hand, in the case where the blending amount of the thermoplastic elastomer (A) exceeds 25 parts by weight, it is difficult to satisfy the peeling requirement when peeled with a hot aqueous alkaline solution, which is stipulated in "self-imposed design guideline of second class-designated PET bottles".

The rosin tackifier (B) is used for improving the adhesive force with a base material. In the case where a blending amount thereof is less than 30 parts by weight, there cause problems that the peeling requirement when peeled with a hot aqueous alkaline solution, which is stipulated in the aforementioned guideline, and the adhesive force at a normal temperature is deteriorated. On the other hand, in the case where the blending amount exceeds 40 parts by weight, there causes a problem that when a label is manually peeled, an adhesive remains on the base material.

Further, the terpene phenol resin and/or polybutene (C) is used for strengthening the adhesive force at a low temperature. In the case where a blending amount thereof is less than 1 part by weight, the adhesiveness at a low temperature is lowered. On the other hand, in the case where the blending amount exceeds 10 parts by weight, there causes a problem that the adhesiveness at a high temperature is lowered.

The synthetic oil (D) is used for improving manual peelability and eliminating the residual adhesive on a PET bottle at the manual peeling. In the case where a blending amount thereof is less than 30 parts by weight, the adhesiveness and adhesive strength at a low temperature are deteriorated. On the other hand, in the case where the blending amount thereof exceeds 40 parts by weight, there cause problems that the alkali peeling is not realized and the adhesive strength at a high temperature is deteriorated.

Furthermore, the polypropylene wax to which maleic anhydride is graft polymerized (E) is used for improving the adhesive force of the label, in particular, of an OPP label. In the case where a blending amount thereof is less than 1 part by weight, there cause problems that the adhesive strength of the OPP label is deteriorated and the residual adhesive remains at the manual peeling of the label. On the other hand, in the case where the blending amount exceeds 10 parts by weight, there causes a problem that the alkali peeling is not realized.

An antioxidant for inhibiting the thermal deterioration and/or thermal decomposition of the adhesive and a colorant such as a fluorescent coloring agent may be added in the alkali dispersible-type hot-melt adhesive composition of the invention, as required.

The softening point of the alkali dispersible-type hot-melt adhesive composition is preferably 60°C or more and 95°C or less, and more preferably 60°C or more and 85°C or less. In the case where the softening point is less than 60°C, the label may be, in some cases, readily peeled off when the PET bottle is heated. On the other hand, in the case where the softening point exceeds 95°C, the alkali dispersible-type hot-melt adhesive composition may contaminate the surrounding in some cases. The reason is as follows. That is, when a hot-melt adhesive composition is applied to a PET bottle, an alkali dispersible-type hot-melt adhesive composition is applied on a bar called a scraper in the first place and then transferred onto a heated roll, followed by applying it to a PET bottle. However, since the scraper is not heated, the hot-melt adhesive applied on the bar starts solidifying and contaminates the surrounding in some cases. The softening point was determined according to a softening point test method by a ring and ball method of JIS K 6863-1994 (corresponding to ISO 4625:1980).

The viscosity of the alkali dispersible-type hot-melt adhesive composition at 140°C is preferably 300 mPa·s or more and 2,500 mPa·s or less. In the case where the viscosity of the alkali dispersible-type hot-melt adhesive composition is less than 300 mPa·s, when the alkali dispersible-type hot-melt adhesive composition is applied to a PET bottle, it drops from a heat roll or a scraper used for applying to a PET bottle or a label to fail to apply favorably the alkali dispersible-type hot-melt adhesive composition to the PET bottle or label as a coating amount becomes insufficient. Further, in the case where the viscosity of the alkali dispersible-type hot-melt adhesive composition at 140°C exceeds 2,500 mPa·s, it starts solidifying on the heat roll or scraper to result in contaminating the environment in some cases.

The alkali dispersible-type hot-melt adhesive composition of the invention is produced by melting and blending a thermoplastic elastomer (A), a rosin tackifier having an acid value of 100 mgKOH/g or more and 300 mgKOH/g or less (B), a terpene phenol resin and/or polybutene (C), synthetic oil (D), and polypropylene wax to which maleic anhydride is graft polymerized (E), respectively in predetermined amounts to make those a homogeneous mixture. The melting and blending temperature is preferably 90°C or more and 180°C or less. When the melting point is less than 90°C, there causes a problem that the blending is unfavorably conducted. On the other hand, when the melting point exceeds 180°C, there cause problems that browning due to thermal deterioration or thermal decomposition thereof may come into. As a blending device, an existing known or well-known blender such as a stirrer or an extruder may be used. At that time, a melting method, a blending method, and an order of melting and blending may be arbitrary. There will be exemplified a method of the alkali dispersible-type hot-melt adhesive composition. First, predetermined amounts of the terpene phenol resin and/or polybutene (C) and synthetic oil (D) are charged into a blender vessel and then melted and mixed. In the second place, the thermoplastic elastomer (A), rosin tackifier (B) and polypropylene wax to which maleic anhydride is graft polymerized (E) are charged into the melt one by one while stirring and blended to make a homogeneous mixture. The alkali dispersible-type hot-melt adhesive composition is thereby formed. All of these may be simultaneously melted and stirred using a bi-axial extruder.

The alkali dispersible-type hot-melt adhesive composition of the invention can be used as an adhesive for adhering a paper or a plastic film to various base materials such as glass, plastics or metal. The alkali dispersible-type hot-melt adhesive composition of the invention can be manually peeled off as mentioned above and the adhered paper or film can be readily peeled off with a hot aqueous alkaline solution. Accordingly, a preferable use mode of the alkali dispersible-type hot-melt adhesive composition include an adhesive for labels of glass containers such as glass bottles or plastic containers such as PET bottles, in which a refreshing drink, a seasoning, a detergent, a shampoo, a cocking oil, a cosmetic, a drug are filled with. However, the use of the adhesive in the invention is not restricted thereto and may be used as adhesives of all existing uses such as gum tapes, clear cases, or assembling. However, as shown in Examples specifically, the alkali dispersible-type hot-melt adhesive composition of the invention satisfies requirements of peeling a label with a hot aqueous alkaline solution and manually peeling without residual adhesive, which are provide in the "self-imposed restriction guideline of designated PET bottles" published by the Council for PET Bottle Recycling. Therefore, a use as an adhesive used when a label is pasted to a PET bottle, that is, an use as a adhesive adapted to recycling of PET bottles is most preferred.

As mentioned above, the alkali dispersible-type hot-melt adhesive composition of the invention is preferably used to paste a label to a PET bottle. OPP, PE and PET as well as paper are used usually as a base material of label for PET bottle. There may be used a label wherein printing is appropriately applied on the opposite side to a side on which an adhesive is applied, that is, a surface of the label or on a side on which an adhesive is applied, that is, a back surface of the label. The alkali dispersible-type hot-melt adhesive composition of the invention may be applied to a printed or not printed back surface of a label. In each case, the alkali dispersible-type hot-melt adhesive composition shows the predetermined adhesiveness, peelability and solubility to a hot aqueous alkaline solution. Further, printing may be applied on a whole back surface or a partial back surface of a label. Any one of existing printing methods such as a gravure printing method and a UV-printing method may be used for printing a label.

In the case of PET bottle, there are cases wherein a label is pasted partially on a bottle body and is pasted in the manner as a bottle body is entirely encircled by use of a label wrapping around a container body. As the label wrapping around a container body, an OPP film is much used. The alkali dispersible-type hot-melt adhesive composition of the invention may excellently paste a label wrapping around a bottle body, which are made by OPP film with a printed or not printed back surface equally. The alkali dispersible-type hot-melt adhesive composition of the invention may be applied entirely or partially on a back surface of label. Examples of the coating method of the alkali dispersible-type hot-melt adhesive composition include an open wheel method, a close gun method, and a direct coat method. As a method wherein an adhesive does not remain at the peeling of a label, an open wheel method and a direct coat method are preferred.

When a label is pasted to a PET bottle using the alkali dispersible-type hot-melt adhesive composition of the invention, the hot-melt adhesive composition molten at a temperature of about 120 to 150°C is applied to a back surface of a label with an open wheel type device, and a label to which the adhesive is applied is pasted to a PET bottle, for example.

EXAMPLES

Hereinafter, the invention will be specifically described with reference to Examples and Comparative Examples. However, the invention is not restricted to following Examples.

In the following Examples, as a thermoplastic elastomer (A), a rosin tackifier having an acid value of 100 to 300 mgKOH/g (B), a terpene phenol resin and/or polybutene (C), synthetic oil (D), and polypropylene wax to which maleic anhydride is graft polymerized(E), following materials are used.

Thermoplastic Elastomer (A)

- KRATON G1650 (trade name; hereinafter, abbreviated as "G1650") manufactured by Kraton Polymers Company, which is a styrene-ethylene/butylene-styrene block polymer (SEBS) having a melt viscosity[*1] of 18,000 mPa·s.
- KRATON G1652 (trade name; hereinafter, abbreviated as "G1652") manufactured by Kraton Polymers Company, which is a styrene-ethylene/butylene-styrene block polymer (SEBS) having a melt viscosity[*1] of 1,350 mPa·s.
- KRATON G1726 (trade name; hereinafter, abbreviated as "G1762") manufactured by Kraton Polymers Company, which is a styrene-ethylene/butylene-styrene block polymer (SEBS) having a melt viscosity[*1] of 200 mPa·s.

Further, the melt viscosity[*1] above is the melt viscosity at a 25% by weight toluene solution of each thermoplastic elastomer at 25°C. The melt viscosity was measured with a B-type Viscometer RB80L (trade name) manufactured by Toki Sangyo Co., Ltd. at an appropriate number of rotations with a No. 3 rotor.

Rosin Tackifier (B)

- RIKA ROSIN F (trade name) manufactured by Rika Fine Tech Inc. , which has an acid value of 175 mgKOH/g and a softening point of 72°C.
- KE-604 (trade name) manufactured by Arakawa Chemical Industries, Ltd. , which is a hydrogenated acrylic acid-modified rosin having an acid value of 240 mgKOH/g and a softening point of 125°C.

Terpene Phenol Resin and Polybutene (C)

- YS POLYSTER T30 (trade name; hereinafter, abbreviated as "T-30") manufactured by Yasuhara Chemical Co., Ltd., which is a terpene phenol copolymer having the softening point of 30°C.
- Idemitsu polybutene (trade name; hereinafter, abbreviated as "100R") manufactured by Idemitsu Kosan Co., Ltd.

Synthetic Oil (D)

- DIANA FRESIA N-90 (trade name; hereinafter, referred to as "DIANA N90") manufactured by Idemitu Kosan Co. , Ltd., which is a naphthene base process oil.

Maleic anhydride-modified polypropylene (PP) wax (E)

- LICOCENE PPMA 6252 (trade name; hereinafter, abbreviated as "PPMA 6252") manufactured by Clariant Japan K. K. , which has an acid value of 40 mgKOH/g and a DSC melting point of 127°C.
- LICOCENE PPMA 1462 (trade name; hereinafter, abbreviated as "PPMA 1462") manufactured by Clariant Japan K. K. , which has an acid value of 50 mgKOH/g and a DSC melting point of 66°C.
- X-10016 (trade name) manufactured by Baker Hughes Inc. , which has an acid value of 60 mgKOH/g and a DSC melting point of 117°C.

Further, in Comparative Examples, following materials are used.

Thermoplastic elastomer (A)

- G1652
- G1726

Tackifier

- RIKATAC F (trade name) manufactured by Rica Fine Tec Inc., which has an acid value of 168 mgKOH/g and a softening point of 75°C.

Terpene Phenol Resin (C)

- T-30

Synthetic Oil (D)

- DIANA N90

Glyceride of fatty acid

- COCONUT OIL: Purified Coconut Oil Chemical (trade name) manufactured by Tukishima Shokuhin Kogyo, which is C6 to C18 fatty acid ester.

Liquid rubber

- HIMOL 4H (trade name) manufactured by Nippon Oil Corporation, which is polyisobutylene having a viscosity average molecular weight of 40,000.

Wax (ethylene-acrylic acid copolymer)

- A-C5120 (trade name) manufactured by Allied Chemical, which has an acid value of 120 mgKOH/g and a DSC melting point of 66°C.
- A-C5180 (trade name) manufactured by Allied Chemical, which has an acid value of 180 mgKOH/g and a DSC melting point of 43°C.

Polypropylene (PP) Wax

- NP055 (trade name) manufactured by Mitsui Chemicals, Inc., which has an acid value of 0 mgKOH/g and a DSC melting point of 136°C.

Paraffin Wax

- 140°C Paraffin wax which has an acid value of 0 mgKOH/g and a DSC melting point of 61°C.

Example 1

<Preparation Method of Alkali dispersible-type Hot-melt Adhesive Composition>

Into a stainless beaker equipped with a stirrer, 10 parts by weight of the terpene phenol resin, T-30 and 31 parts by weight of the synthetic oil, DIANA N90 were charged and heated to melt. The heating was carefully conducted so that the content may be heated not to be exceeding 150°C. After melting, stirring was conducted to form a homogeneous melt solution, and then 16 parts by weight of the thermoplastic elastomer, G1650 were gradually added to the melt under stirring with keeping the temperature 150°C or less. After the completion of addition, 39 parts by weight of the rosin tackifier, RIKA ROSIN F were added. At the last 4 parts by weight of the polypropylene wax to which maleic anhydride is graft polymerized, PPMA 1462 were added and melted to form a homogeneous melt mixture. The mixture was cooled down and an alkali dispersible-type hot-melt adhesive composition was prepared.

The softening point of the obtained alkali dispersible-type hot-melt adhesive composition was 64°C and the viscosity thereof at 140°C was 800 mPa·s. In addition, the viscosity at 140°C was measured according to a method shown below.

<Measuring Method of Viscosity at 140°C>

The viscosity at 140°C was measured in accordance with JIS K6862 (A-Method). That is, 300 g of a hot-melt adhesive composition heated in advance to nearly 150°C was charged into a test vessel, followed by thoroughly stirring with a bar thermometer. When the temperature reached to 140°C under stirring, the viscosity thereof was measured with a B-type viscometer, TOKIMEC VISCOMETER MODEL: BM (trade name) manufactured by Toki Sangyo K. K. An appropriate rotor was used at that time, as required.

Further, the alkali peelability, adhesive removal properties, and adhesiveness (adhesive strength) to OPP and PET were evaluated according to methods shown below. As a result, both the alkali peelability and adhesive removal properties of the alkali dispersible-type hot-melt adhesive composition obtained in Example 1 were evaluated as ○, that shows "good". The adhesiveness to OPP was 0.9 N/15 mm and the adhesiveness to PET was 1.5 N/15 mm.

At the measurement of each of the alkali peelability, adhesive removal properties and adhesiveness to PET, a hot-melt adhesive composition was applied to a printed label made of an OPP film having a thickness of 50 $\mu$m by a labeler manufactured by Sakumi labeler Co. , Ltd. at a coated amount of 20 to 30 mg/line and in a coated area of 15 cm$^2$, followed by pasting it at a temperature of 140°C to a 2 L pillar PET bottle at the speed of 80 bpm, thereby being prepared a test container around the body of which the label is pasted. The container was provided to the measurement.

<Alkali Peelability>

A test container was crashed into substantially 8 $\times$ 8 mm squares to form pellets of the PET bottle with label. Into a 1000 ml round flask, 90 g of a 1.5% by weight aqueous sodium hydroxide solution heated to 85 to 90°C and 10 g of the pellets were charged, followed by stirring with a propeller as a stirring blade at 250 rpm. After 15 minutes, the mixture was filtered with a filter and the pellets remaining on the filter were observed by eyes. When the label was peeled and the hot-melt adhesive composition did not remain on the PET bottle, it was evaluated as ○, that shows "acceptable". When the label remained on the PET bottle or the hot-melt adhesive composition remained on the PET bottle, it was evaluated as X, that shows "unacceptable".

<Adhesive Remain Properties>

Whether the hot-melt adhesive composition remains on the PET bottle or not when manually peeling the label from the test container was evaluated. The test was conducted in a thermohygrostat set at a temperature of 23°C and a humidity of 65%. When the hot-melt adhesive composition did not remain on the PET bottle, it was evaluated as ○, that shows "acceptable". When the hot-melt adhesive composition remained on the PET bottle, it was evaluated as $\times$, that shows "unacceptable".

<Adhesive Strength to OPP>

A measurement of the adhesive strength to OPP was conducted as follows. That is, a sample formed by applying a hot-melt adhesive to a printed surface of an OPP film was cut into 15 mm in width, followed by pasting the cut sample to an OPP film and then a 180° peeling test of the cut sample was conducted at a peeling speed of 300 mm/min in a thermohygrostat set up at a temperature of 23°C and a humidity of 65%.
When the adhesive strength to OPP is 0.4 N/15 mm or more, it was evaluated as ○, that shows "acceptable". When the adhesive strength to OPP is less than 0.4 N/15 mm, it was evaluated as ×, that shows "unacceptable".

<Adhesive Strength to PET>

A measurement of the adhesive strength was conducted as follows. That is, a test container to which a label is pasted was cut into 15 mm in width, followed by conducting a 180° peeling test at peeling speed of 300 mm/min in a thermohygrostat set up at a temperature of 23°C and a humidity of 65%.
When the adhesive strength to PET is 0.4 N/15 mm or more, it was judged as ○, that shows "acceptable"). When the adhesive strength to PET is less than 0.4 N/15 mm, it was judged as ×, that shows "unacceptable".

Examples 2 to 6

Alkali dispersible-type hot-melt adhesive compositions of Examples 2 to 6 were prepared in the same manner as Example 1 except that, as the thermoplastic elastomer (A), the rosin base tackifier (B), the terpene phenol resin (C), the synthetic oil (D), and the polypropylene wax to which maleic anhydride is graft polymerized (E), components described in Table 2 below were used by amounts described in the Table 2.

Table 2

|  | Components | Example 1 | Example 2 | Example 3 | Example 4 | Example 5 | Example 6 |
|---|---|---|---|---|---|---|---|
| Thermoplastic elastomer (A) | G1650 | 16 | 5 | 10 | 11 |  |  |
|  | G1652 |  | 10 | 3 |  | 18 | 9 |
|  | G1726 |  | 10 | 5 | 11 |  | 9 |
| Rosin Tackifier (B) | RIKA ROSIN F | 39 | 30 | 30 | 31 | 35 | 30 |
|  | KE-604 |  |  | 8 |  |  | 8 |
| Terpene Phenol Resin or Polybutene (C) | T-30 | 10 | 3 | 1 |  | 8 | 6 |
|  | 100R |  |  |  | 6 |  |  |
| Synthetic Oil (D) | DIANA N90 | 31 | 40 | 34 | 37 | 34 | 34 |
| Maleic Anhydride-modified PP Wax (E) | PPMA1462 | 4 |  |  | 4 |  | 4 |
|  | PPMA6252 |  |  | 9 |  |  |  |
|  | X-10016 |  | 2 |  |  | 5 |  |
| Total |  | 100 | 100 | 100 | 100 | 100 | 100 |

The softening point, viscosity at 140°C, alkali peelability, adhesive remain properties, adhesiveness (adhesive strength) to OPP, and adhesiveness (adhesive strength) to PET of each alkali dispersible-type hot-melt adhesive composition of Examples 2 to 6 were measured and evaluated in the same manner as Example 1. Results are shown in Table 3 together with the results of Example 1.

Table 3

|  | unit | Example 1 | Example 2 | Example 3 | Example 4 | Example 5 | Example 6 |
|---|---|---|---|---|---|---|---|
| Softening point | °C | 64 | 84 | 82 | 78 | 72 | 68 |

(continued)

| | unit | Example 1 | Example 2 | Example 3 | Example 4 | Example 5 | Example 6 |
|---|---|---|---|---|---|---|---|
| Viscosity at 140°C | mPa·s | 800 | 2000 | 900 | 1700 | 1400 | 750 |
| Alkali Peelability | | ○ | ○ | ○ | ○ | ○ | ○ |
| Adhesive Remain Properties | | ○ | ○ | ○ | ○ | ○ | ○ |
| Adhesiveness to OPP | N/15mm | 0.9 ○ | 0.8 ○ | 0.9 ○ | 0.8 ○ | 0.9 ○ | 0.8 ○ |
| Adhesiveness to PET | N/15mm | 1.5 ○ | 1.4 ○ | 1.6 ○ | 1.4 ○ | 1.5 ○ | 1.5 ○ |

Comparative Example 1

<Preparation Method of Alkali dispersible-type Hot-melt Adhesive Composition>

Into a stainless beaker with a stirrer, 10 parts by weight of WAX A-C5120, 2. 5 parts by weight of the terpene phenol resin, T-30, and 10 parts by weight of coconut oil (C6-C18) were charged and heated to melt. The heating was carefully conducted so that a temperature of contents may not exceed 150°C. After melting, stirring was conducted to form a homogeneous melt solution, and then 10 parts by weight of the thermoplastic elastomer, G1652 were gradually added to the melt with keeping the temperature at 150°C or less under stirring. After the completion of addition, 2.5 parts by weight of the terpene phenol resin, T-30 were added and finally 65 parts by weight of the tackifier, RIKATACK F were added, followed by melting to make a homogeneous melt mixture. The mixture was cooled down and an alkali dispersible-type hot-melt adhesive composition of Comparative Example 1 was prepared.

The softening point and viscosity at 140°C of the obtained alkali dispersible-type hot-melt adhesive composition were evaluated in the same manner as Example 1. The softening point thereof was 63°C and the viscosity at 140°C was 600 mPa·s.

Further, the alkali peelability, adhesive remain properties, adhesiveness (adhesive strength) to OPP, and adhesiveness (adhesive strength) to PET of the obtained alkali dispersible-type hot-melt adhesive composition were evaluated in the same manner as Example 1. Results are shown in Table 5.

Comparative Example 2

Into a stainless beaker with a stirrer, 5 parts by weight of WAX A-C5180, 2.5 parts by weight of the terpene phenol resin, T-30, 5 parts by weight of coconut oil (C6-C18), and 10 parts by weight of liquid rubber, HIMOL 4H were charged and heated to melt. The heating was carefully conducted so that a temperature of contents may not exceed 150°C. After melting, stirring was conducted to form a homogeneous melt solution, and then 15 parts by weight of the thermoplastic elastomer, G1726 were gradually added to the melt with keeping the temperature 150°C or less under stirring. After the completion of addition, 2.5 parts by weight of the terpene phenol resin, T-30 were added and finally 60 parts by weight of the tackifier, RIKATACK F were added, followed by melting to make a homogeneous melt mixture. The mixture was cooled down and an alkali dispersible-type hot-melt adhesive composition of Comparative Example 2 was prepared.

The softening point and viscosity at 140°C of the obtained alkali dispersible-type hot-melt adhesive composition were measured in the same manner as Example 1. The softening point thereof was 65°C and the viscosity at 140°C was 300 mPa·s.

The alkali peelability, adhesive remain properties, adhesiveness (adhesive strength) to OPP, and adhesiveness (adhesive strength) to PET of the obtained alkali dispersible-type hot-melt adhesive composition were evaluated in the same manner as Example 1. Results are shown in Table 5.

Comparative Example 3

Into a stainless beaker with a stirrer, 5 parts by weight of PP WAX, NP055, 4 parts by weight of the terpene phenol resin, T-30, and 34 parts by weight of synthetic oil, DIANA N90 were charged and heated to melt. The heating was carefully conducted so that a temperature of contents may not be 150°C or more. After melting, stirring was conducted to form a homogeneous melt solution and then 18 parts by weight of the thermoplastic elastomer, G1652 were gradually added to the melt with keeping the temperature at 150°C or less under stirring. After the completion of addition, 4 parts by weight of the terpene phenol resin, T-30 were added and finally 35 parts by weight of the tackifier, RIKATACK F were added, followed by melting to make a homogeneous melt mixture. The mixture was cooled down and an alkali dispersible-type hot-melt adhesive composition of Comparative Example 3 was prepared.

The softening point and viscosity at 140°C of the obtained alkali dispersible-type hot-melt adhesive composition were evaluated in the same manner as Example 1. The softening point thereof was 84°C and the viscosity at 140°C was 1200 mPa·s.

The alkali peelability, adhesive removal properties, adhesiveness (adhesive strength) to OPP and adhesiveness (adhesive strength) to PET of the obtained alkali dispersible-type hot-melt adhesive composition were measured in the same manner as Example 1. Results are shown in Table 5.

Comparative Example 4

Into a stainless beaker with a stirrer, 5 parts by weight of paraffin wax, 140°C PARAFFIN, 2.5 parts by weight of the terpene phenol resin, T-30, and 35 parts by weight of synthetic oil, DIANA N90 were charged and heated to melt. The heating was carefully conducted so that a temperature of contents may not be 150°C or more. After melting, stirring was conducted to form a homogeneous melt solution and then 20 parts by weight of the thermoplastic elastomer, G1652 were gradually added to the melt with keeping a temperature 150°C or less under stirring. After the completion of addition, 2.5 parts by weight of the terpene phenol resin, T-30 were added and finally 35 parts by weight of the tackifier, RIKATACK F were added, followed by melting to make a homogeneous melt mixture. The mixture was cooled down and an alkali-dispersed hot-melt adhesive composition of Comparative Example 4 was prepared.

The softening point and viscosity at 140°C of the obtained alkali dispersible-type hot-melt adhesive composition were evaluated in the same manner as Example 1. The softening point thereof was 68°C and the viscosity at 140°C was 1300 mPa·s.

The alkali peelability, adhesive remain properties, adhesiveness (adhesive strength) to OPP, and adhesiveness (adhesive strength) to PET of the obtained alkali dispersible-type hot-melt adhesive composition were measured in the same manner as Example 1. Results are shown in Table 5.

Constitutions of the alkali dispersible-type hot-melt adhesive compositions of Comparative Examples 1 to 4 are summarized and shown in Table 4.

Table 4

| | Components | Comparative Example 1 | Comparative Example 2 | Comparative Example 3 | Comparative Example 4 |
|---|---|---|---|---|---|
| Thermoplastic elastomer (A) | G1652 | 10 | | 18 | 20 |
| | G1726 | | 15 | | |
| Tackifier | RIKATACK F | 65 | 60 | 35 | 35 |
| Terpene Phenol Resin (C) | T-30 | 5 | 5 | 8 | 5 |
| Glyceride | coconut oil (C6-C18) | 10 | 5 | | |
| Liquid Rubber | | | 10 | | |
| Synthetic Oil (D) | | | | 34 | 35 |
| Wax (ethylene-acrylic acid copolymer) | A-C5120 | 10 | | | |
| | A-C5180 | | 5 | | |
| PP Wax | | | | 5 | |
| Paraffin Wax | | | | | 5 |
| Total | | 100 | 100 | 100 | 100 |

Table 5

| | unit | Comparative Example 1 | Comparative Example 2 | Comparative Example 3 | Comparative Example 4 |
|---|---|---|---|---|---|
| Softening Temperature | °C | 63 | 65 | 84 | 68 |
| Viscosity at 140°C | mPa·s | 600 | 300 | 1200 | 1300 |
| Alkali Peelability | | ○ | ○ | × | ○ |
| Adhesive Remain Properties | | × | × | ○ | ○ |
| Adhesiveness to OPP | N/15mm | 20 ○ | 20 ○ | 0.6 ○ | 0.2 × |
| Adhesiveness to PET | N/15mm | 30 ○ | 40 ○ | 2.6 ○ | 2.0 ○ |

From Tables 2 and 3, the alkali dispersible-type hot-melt adhesive compositions of the invention can be manually peeled from a PET bottle without residual adhesive and has the alkali peeling aptitude. Accordingly, the alkali dispersible-type hot-melt adhesive compositions correspond to a B rank of the recycle aptitude provided by the Council for PET Bottle Recycling in Japan. On the other hand, from Tables 4 and 5, it is found that the alkali dispersible-type hot-melt adhesive compositions of Comparative Examples 1 and 2 stay on the PET bottle when a label is peeled from a PET bottle. Therefore these do not satisfy the B rank or higher provided by the Council for PET Bottle Recycling. Further, the alkali dispersible-type hot-melt adhesive composition of Comparative Example 3 lacks the alkali peelability, that is, does not satisfy the requirement of recycle standard provided by the Council for PET Bottle Recycling. Furthermore, as the alkali dispersible-type hot-melt adhesive composition of Comparative Example 4 has a weak adhesive strength to an OPP film such as less than 0.4 N/15 mm, the label prepared using the adhesive composition of Comparative Example 4 may peel off during transportation. The adhesive composition of Comparative Example 4, therefore, does not satisfy the requirement as the adhesive for labels.

**Claims**

1. An alkali dispersible-type hot-melt adhesive composition which comprises a thermoplastic elastomer (A), a rosin tackifier having an acid value of 100 mgKOH/g or more and 300 mgKOH/g or less (B), a terpene phenol resin and/or polybutene (C), synthetic oil (D), and polypropylene wax to which maleic anhydride is graft polymerized (E).

2. The alkali dispersible-type hot-melt adhesive composition according to claim 1, wherein the polypropylene wax to which maleic anhydride is graft polymerized (E) has an acid value of 30 to 100 mgKOH/g.

3. The alkali dispersible-type hot-melt adhesive composition according to claim 1, wherein 15 parts by weight or more and 25 parts by weight or less of the thermoplastic elastomer (A), 30 parts by weight or more and 40 parts by weight or less of the rosin tackifier (B), 1 part by weight or more and 10 parts by weight or less of the terpene phenol resin and/or polybutene (C), 30 parts by weight or more and 40 parts by weight or less of the synthetic oil (D), and 1 parts by weight or more and 10 parts by weight or less of the polypropylene wax to which maleic anhydride is graft polymerized (E) are blended so as to be 100 parts by weight in total.

4. The alkali dispersible-type hot-melt adhesive composition according to claim 1, wherein the softening point thereof is 60°C or more and 95°C or less.

5. A method for producing an alkali dispersible-type hot-melt adhesive composition, which comprises blending a thermoplastic elastomer (A), a rosin tackifier with an acid value of 100 mgKOH/g or more and 300 mgKOH/g or less (B), a terpene phenol resin and/or polybutene (C), synthetic oil (D), and polypropylene wax to which maleic anhydride is graft polymerized (E) at a dissolving temperature of 90°C or more and 180°C or less.

6. A container to which a label is pasted by use of the alkali dispersible-type hot-melt adhesive composition according o any one of claims 1 to 4.

7. The container according to claim 6, wherein the label is one wrapping around the container body.

8. The container according to claim 6, wherein the container is a plastic container made of polyethylene terephthalate.

9. The container according to claim 7, wherein the label is made of an oriented polypropylene film.

10. The container according to any one of claim 6, wherein the alkali dispersible-type hot-melt adhesive composition is applied to a printed surface of a label, followed by pasting the label to the container.

11. A method for producing a container to which a label is pasted, wherein the alkali dispersible-type hot-melt adhesive composition according to any one of claims 1 to 4 is applied to a label, followed by pasting the label to the container.

**Patentansprüche**

1. Alkali-dispergierbare Heißschmelzkleber Zusammensetzung, aufweisend:

ein thermoplastisches Elastomer (A),
einen Harz-Tackifier mit einer Säurezahl zwischen 100 mg KOH/g und 300 mg KOH/g (B),
ein Terpen Phenol Harz und/oder Polybuten (C),
synthetisches Öl (D), und
Polypropylen-Wachs, auf das Maleinsäureanhydrid pfropfpolymerisiert ist (E).

2. Alkali-dispergierbare Heißschmelzkleber Zusammensetzung nach Anspruch 1, wobei das Polypropylen- Wachs, auf das Maleinsäure pfropfpolymerisiert ist (E), eine Säurezahl von 30 bis 100 mg KOH/g besitzt.

3. Alkali-dispergierbare Heißschmelzkleber Zusammensetzung nach Anspruch 1, wobei

15 und 25 Gewichtsteile des thermoplastischen Elastomers (A),
30 - 40 Gewichtsteile des Harz Tackifiers (B),
1 - 10 Gewichtsteile des Terpen Phenol Harzes und/oder Polybuten (C),
30 - 40 Gewichtsteile des synthetischen Öls (D); und
1 - 10 Gewichtsteile des Polypropylen- Wachses, auf das Maleinsäureanhydrid pfropfpolymerisiert ist (E);
vermischt werden, damit sie insgesamt 100 Gewichtsteile ergeben.

4. Alkali-dispergierbare Heißschmelzkleber-Zusammensetzung nach Anspruch 1, wobei der Erweichungspunkt zwischen 60°C und 95°C liegt.

5. Verfahren zur Herstellung einer Alkali-dispergierbaren Heißschmelzkleber Zusammensetzung, die aufweist:

Mischen bei einer Lösungstemperatur zwischen 90°C und 180°C :

eines thermoplastischen Elastomers (A),
eines Harz Tackifiers mit einer Säurezahl zwischen 100 mg KOH/g und 300 mg KOH/g (B),
eines Terpen Phenol Harzes und/oder Polybuten (C),
synthetischen Öls (D), und
von Polypropylen-Wachs, auf das Maleinsäureanhydrid pfropfpolymerisiert ist (E),

6. Behälter, auf den einEtikett unter Verwendung der Alkali-dispergierbaren Heißschmelzkleber-Zusammensetzung nach einem der Ansprüche 1 bis 4 geklebt ist.

7. Behälter nach Anspruch 6, wobei das Etikett um den Behälterkörper gewickelt ist.

8. Behälter nach Anspruch 6, wobei der Behälter ein Kunststoff-Behälter aus Polyethylenterephtalat ist.

9. Behälter nach Anspruch 7, wobei das Etikett aus orienterter Polypropylenfolie hergestellt ist.

10. Behälter nach einem der Ansprüche 6 - 9, wobei die Alkali-dispergierbare Heißschmelzkleber Zusammensetzung auf eine bedruckte Oberfläche eines Etiketts aufgebracht wird, gefolgt durch Aufkleben des Etiketts auf den Behälter.

11. Verfahren zur Herstellung eines Behälters, auf den ein Etikett geklebt ist, wobei die Alkali-dispergierbare Heißschmelzkleber Zusammensetzung nach einem der Ansprüche 1 bis 4 auf ein Etikett aufgebracht wird, gefolgt durch Kleben des Etiketts auf den Behälter.

**Revendications**

1. Composition adhésive thermofusible de type dispersible en milieu alcalin qui comprend un élastomère thermoplastique (A), un agent poisseux à base de colophane ayant un indice d'acide supérieur ou égal à 100 mg de KOH/g et inférieur ou égal à 300 mg de KOH/g (B), une résine terpène-phénolique et/ou du polybutène (C), de l'huile synthétique (D) et de la cire de polypropylène sur laquelle de l'anhydride maléique est polymérisé par greffage (E).

2. Composition adhésive thermofusible de type dispersible en milieu alcalin selon la revendication 1, dans laquelle la cire de polypropylène sur laquelle de l'anhydride maléique est polymérisé par greffage (E) a un indice d'acide de 30 à 100 mg de KOH/g.

3. Composition adhésive thermofusible de type dispersible en milieu alcalin selon la revendication 1, dans laquelle 15 parties en poids ou plus et 25 parties en poids ou moins de l'élastomère thermoplastique (A), 30 parties en poids ou plus et 40 parties en poids ou moins de l'agent poisseux à base de colophane (B), 1 partie en poids ou plus et 10 parties en poids ou moins de la résine terpène-phénolique et/ou du polybutène (C), 30 parties en poids ou plus et 40 parties en poids ou moins de l'huile synthétique (D) et 1 partie en poids ou plus et 10 parties en poids ou moins de la cire de polypropylène sur laquelle de l'anhydride maléique est polymérisé par greffage (E) sont mélangées de façon à constituer 100 parties en poids au total.

4. Composition adhésive thermofusible de type dispersible en milieu alcalin selon la revendication 1, son point de ramollissement étant supérieur ou égal à 60 °C et inférieur ou égal à 95 °C.

5. Procédé pour la production d'une composition adhésive thermofusible de type dispersible en milieu alcalin, qui comprend le mélange d'un élastomère thermoplastique (A), d'un agent poisseux à base de colophane ayant un indice d'acide supérieur ou égal à 100 mg de KOH/g et inférieur ou égal à 300 mg de KOH/g (B), d'une résine terpène-phénolique et/ou de polybutène (C), d'huile synthétique (D) et de cire de polypropylène sur laquelle de l'anhydride maléique est polymérisé par greffage (E) à une température de dissolution supérieure ou égale à 90 °C et inférieure ou égale à 180 °C.

6. Récipient sur lequel une étiquette est collée à l'aide de la composition adhésive thermofusible de type dispersible en milieu alcalin selon l'une quelconque des revendications 1 à 4.

7. Récipient selon la revendication 6, dans lequel l'étiquette en est une enveloppant le corps du récipient.

8. Récipient selon la revendication 6, le récipient étant un récipient en plastique constitué de poly(téréphtalate d'éthylène).

9. Récipient selon la revendication 7, dans lequel l'étiquette est constituée d'un film de polypropylène orienté.

10. Récipient selon la revendication 6, dans lequel la composition adhésive thermofusible de type dispersible en milieu alcalin est appliquée sur une surface imprimée d'une étiquette, l'application étant suivie du collage de l'étiquette sur le récipient.

11. Procédé pour la production d'un récipient sur lequel une étiquette est collée, dans lequel la composition adhésive thermofusible de type dispersible en milieu alcalin selon l'une quelconque des revendications 1 à 4 est appliquée sur une étiquette, l'application étant suivie du collage de l'étiquette sur le récipient.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11512134 A
- JP 2005220244 A
- EP 0449249 A2
- US 005143961 A

**Non-patent literature cited in the description**

- self-imposed restraint guideline of designated PET bottles. Council for PET Bottle Recycling
- self-imposed design guideline of second-class designated PET bottle. Council for PET Bottle Recycling in Japan
- self-imposed restraint guideline of designated PET bottles. Council for PET Bottle Recycling in Japan